# EUROPEAN PATENT SPECIFICATION

(11) **EP 0 370 749 B1**
(45) Date of publication and mention of the grant of the patent: **23.03.1994**
(21) Application number: 89312039.4
(22) Date of filing: 21.11.1989
(51) Int. Cl.: B60C 9/20

(54) **Pneumatic radial tyre for passenger cars**
Radialer Luftreifen für PKW
Pneumatique radial pour véhicules de tourisme

(30) Priority: 21.11.1988 JP 292412/88
(43) Date of publication of application: 30.05.1990
(73) Proprietor: SUMITOMO RUBBER INDUSTRIES LIMITED, Chuo-ku Kobe-shi Hyogo 651 (JP)
(72) Inventor: Oku, Masahiro, Osaka-shi Osaka (JP); Kakumu, Kiichiro, Kobe-shi Hyogo (JP); Iwamura, Kazumitsu, Kobe-shi Hyogo (JP)
(74) Representative: Stewart, Charles Geoffrey

(56) References cited:
- DE-A- 2 824 299
- DE-B- 1 085 434

## Description

The present invention relates to a pneumatic radial tyre for passenger cars.

When passenger car tyres are rotating at high speed, a centrifugal force is exerted upon the tread portion and in a radial tyre the belt experiences "lifting" tending to result in its separation from adjacent rubber compounds. In order to prevent this problem some conventional passenger car tyres are provided with reinforcement layers made of organic fibre cords which are wrapped around the tyre in a position radially outward of the belt. The belt is usually made of plies of a plurality of parallel steel cords which are in turn each made up of a plurality of fine steel wires.

Since these organic fibre reinforcement layers are wrapped radially outwardly of the steel belt, a joint is formed where adjacent turns of reinforcement layers overlap each other.

Another joint is formed where the ends of the tread, which is applied as a single layer, are connected. These two joints have been a factor that causes adverse effects on the uniformity of tyres.

In response to the need for improved high speed performance of vehicles, there has been a growing demand for better uniformity of tyres. Conventionally, the maximum value of variations in the radial force component of tyre (RFV, or radial force variation) has been the principle criterion for defining and characterising tyre uniformity, as well as for describing and evaluating the uniformity characteristics.

However, cases have increased in number that defy explanation of the vibratory disturbances or vibrations during high speed running solely in terms of RFV and it has now become clear that vibrations that occur during high speed running are more closely correlated to the maximum value of variations in the tractive force component of tyre (TFV or tractive force variations) than RFV. This has led to the recognition that reducing the TFV accompanying high speed running should be more effective in solving the problem of vibratory disturbances.

The object of the present invention is to provide a pneumatic radial tyre in which TFV during high speed running is sufficiently reduced to improve the uniformity and hence the high speed running properties including endurance of the tyre.

According to the present invention a pneumatic radial tyre comprises a steel belt composed of at least two superposed plies of steel cord fabric of a parallel array of steel cords and a reinforcement layer of organic fibre cords positioned radially outwardly of the steel belt and a tread characterised in that the circumferential location of the joint area A of the tread and the circumferential location of at least one of the joint areas B or C of the reinforcement layer form an angle of 150 - 210 degrees about the axis of the tyre.

Preferably the reinforcement layer comprises a full band of reinforcement layer covering the whole width of the steel belt and an edge band reinforcement layer which is placed either between the full band reinforcement layer and the steel belt or between the full band reinforcement layer and the tread to cover each edge of the steel belt and then the joint area of each edge band reinforcement layer is circumferentially located between the joint areas of said tread A and that of the full band reinforcement layer B to form an angle of 30 degrees or more with each of the joint areas A of the tread and the full reinforcement layer B.

Further aspects of the present invention will be apparent from the following description by way of example only, of embodiments in conjunction with the attached drawings in which:-
Fig.1 is a cross section showing the main part of a tyre to which the concept of the present invention is applied,
Fig.2 shows the positional relationship between the various joint areas of the tyre, and
Fig.3. shows the results of experiments conducted on two tyre examples of the present invention and a comparative tyre.

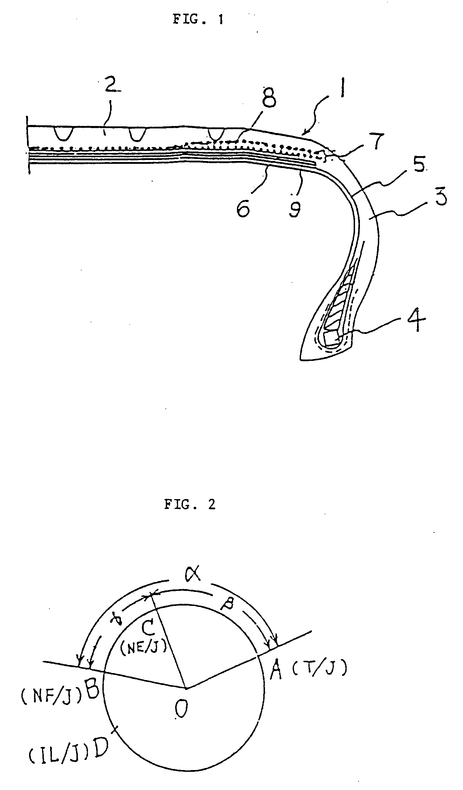

The tyre in Fig.1 generally indicated by 1 has a carcass 5 that extends radially from the tread 2 to the sidewall 3 and which is rolled back around a bead core 4 at both of its edges. A steel belt 6 and a reinforcement layer 7 are disposed under the tread 2. The steel belt 6 is composed of at least two superposed plies on layers of steel cord fabric each made of a parallel array of steel cords, and the reinforcement layer 7 is composed of organic fibre cords and is disposed radially outwardly of the steel belt 6. The reinforcement layer 7 consists of a full band reinforcement layer 8 which covers the whole width of the steel belt 6 and an edge band reinforcement layer 9 which is disposed between the full band reinforcement layer 8 and the steel belt 6 to cover each edge of the steel belt 6. Thus there are two edge bands 9, one on each of the axially inner and outer edges of the belt 6.

Since the joints of both edge bands are in the same circumferential position for convenience both bands will be discussed together.

Fig.2 shows the relative circumferential positions of the various joint areas in the tyre. The position of the joint area of tread 2 is indicated by A, the joint area of the full band reinforcement layer 8 by B, the joint area of the edge band reinforcement layer 9 by C, and the joint edge area of the inner liner by D. The position of the tyre axis is indicated by O in Fig.2.

At least one of either angle α formed between point A (the position of the joint area of the tread) and point B (the position of the joint area of the full band reinforcement layer 8) or angle β formed between point A and point C (the position of the joint area of each edge band reinforcement layer) is within the range of 150-210 degrees with respect of the central tyre axis O.

An even better effect is attained if the angle α between points A and B is in the range of 150-210 degrees with respect of the central tyre axis O the angle β between points A and C and the angle γ formed between points B and C are each 30 degrees or more with respect to the central tyre axis 0.

Table 3 shows the results of experiments conducted on two tyre samples of the present invention and a comparative sample. The comparative sample is a conventional standard tyre in which point A coincides with point B(α = 0°) and point C is circumferential distant from point A-B by an angle outside the range specified by the present invention (for example, β = γ = 68°)

The first sample (example I) of the present invention is a tyre in which point A also coincides with point B,α = 0 degrees and point C is at a circumferential distance from point A-B so as to subtend an angle within the range specified by the present invention (β = γ = 180). The second sample (example II) of the present invention is a tyre in which points A, B and C are circumferentially spaced apart by angles within the ranges specified by the present invention (α = 186 degrees β = 80 degrees, and γ = 106 degrees
In the experiments, the improvement in the uniformity of the three tyre samples was measured and the results evaluated by a five score rating method. The parameters measured were RFV, TVF, LFV (lateral force variation, or the maximum value of variations in the lateral force component of tyre), CON (conicity, or the constant component of the lateral force, which is one of the mean values of variations in the lateral force component of tyre, or LFD, and S.B. (static balance).

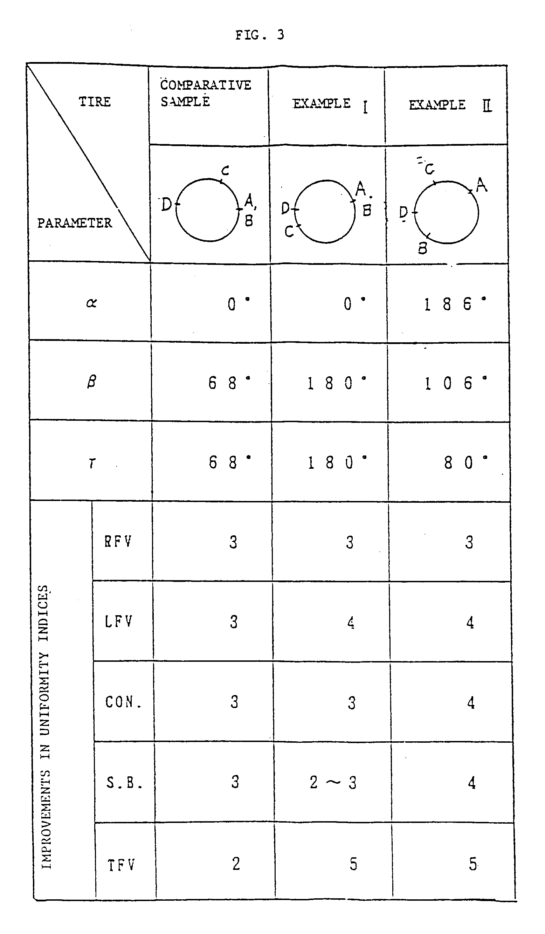

As is clear from Fig.3, the tyre of example 1 is improved in both LFV and TFV, the improvement of the latter being particularly great. Since this tyre has an improved TFV, it is expected to experience reduced vibrations during high speed running.

Results which are the same as those attained by Example I will be obtained even if point B coincides with point C (γ = 0 degrees) and if each of the angles α and β is within the range of 150 - 210 degrees
The tyre of Example II is improved in LFV, conicity and static balance, with particular improvement being achieved in TFV, In other words, this tyre is more improved in uniformity than the tyre of Example I and hence has better high speed endurance on account of reduced vibrations that occur during high speed running.

Having the construction described above, the pneumatic radial tyres of the present invention offers the following advantages. Since the joint area of the tread and that of the reinforcement layer from an angle of 150 - 210 degrees with respect to the central tyre axis, the tyre has a sufficiently improved TFV to damp vibrations during high speed running, thereby insuring better high speed endurance.

## Claims

1. A pneumatic radial tyre comprising a steel belt (6) composed of at least two superposed plies of steel cord fabric of a parallel array of steel cords and a reinforcement layer (7) of organic fibre cords positioned radially outwardly of the steel belt (6) characterised in that the circumferential location of the joint area (A) of the tread (2) and the circumferential location of at least one of the joint areas (B & C) of the reinforcement layer form an angle of 150 - 210 degrees with respect to the central tyre axis.

2. A pneumatic radial tyre according to claims 1 characterised in that the reinforcement layer (7) comprises a full band reinforcement layer (8) that covers that whole width of the steel belt (6) and an edge band reinforcement layer (9) that is placed either between the full band reinforcement layer (8) and the steel belt (6) or between the full band reinforcement layer (8) and the tread (2) to cover each edge of that steel belt (6), and the joint area (C) of each edge band reinforcement layer is circumferentially located between the joint area of said tread (A) and that of the full band reinforcement layer (B) to form an angle of 30 degrees or more with each of the joint areas (A) of the tread and the full reinforcement layer (B) with respect to the central tyre axis.

## Patentansprüche

1. Ein radialer Luftreifen mit einem Stahlgürtel (6), welcher aus mindestens zwei überlagerten Stahlcordlagen mit einer Anordnung von zueinander parallelen Stahlcorden zusammengesetzt ist, und einer Verstärkungslage (7) aus organischen Fasercorden, welche radial außerhalb des Stahlgürtels (6) angeordnet ist,
dadurch **gekennzeichnet**, daß
die Umfangsposition des Verbindungsbereichs (A) der Lauffläche (2) und die Umfangsposition wenigstens eines der Verbindungsbereiche (B & C) der Verstärkungslage einen Winkel von 150 - 210 Grad in bezug auf die zentrale Reifenachse bilden.

2. Ein radialer Luftreifen nach Anspruch 1,
dadurch **gekennzeichnet**, daß
die Verstärkungslage (7) eine Vollbandverstärkungslage (8), welche die ganze Breite des Stahlgürtels (6) bedeckt, und eine Kantenbandverstärkungslage (9) aufweist, welche entweder zwischen der Vollbandverstärkungslage (8) und dem Stahlgürtel (6) oder zwischen der Vollbandverstärkungslage (8) und der Lauffläche (2) angeordnet ist, um jede Kante des Stahlgürtels (6) zu bedecken, und der Verbindungsbereich (C) jeder Kantenbandverstärkungslage sich in Umfangsrichtung zwischen dem Verbindungsbereich der Lauffläche (A) und demjenigen der Vollbandverstärkungslage (B) befindet, um mit jedem der Verbindungsbereiche (A) der Lauffläche und der Vollverstärkungslage (B) einen Winkel von 30 Grad oder mehr in bezug auf die zentrale Reifenachse zu bilden.

## Revendications

1. Pneumatique à carcasse radiale comprenant une ceinture d'acier (6) composée d'au moins deux nappes superposées d'étoffe de câblés d'acier dans laquelle les câblés sont placés parallèlement, et une couche d'armature (7) formée de câblés de fibres organiques placée radialement à l'extérieur de la ceinture d'acier (6), caractérisé en ce que l'emplacement circonférentiel de la zone (A) de joint de la bande de roulement (2) et l'emplacement circonférentiel de l'une au moins des zones de joint (B et C) de la couche d'armature forment un angle de 150 à 210° autour de l'axe central du pneumatique.

2. Pneumatique à carcasse radiale selon la revendication 1, caractérisé en ce que la couche d'armature (7) comprend une couche d'armature (8) à bande complète qui recouvre toute la largeur de la ceinture d'acier (6) et une couche d'armature (9) de bande latérale placée soit entre la couche d'armature (8) de bande complète et la ceinture d'acier (6), soit entre la couche d'armature (8) de bande complète et la bande de roulement (2) afin qu'elle couvre chaque bord de la ceinture d'acier (6), et la zone de joint (C) de chaque couche d'armature de bande latérale est disposée circonférentiellement entre la zone de joint de la bande de roulement (A) et celle de la couche d'armature (B) de bande complète afin qu'un angle de 30° ou plus soit formé avec chacune des zones de joint (A) de la bande de roulement et de la couche d'armature (B) de bande complète, autour de l'axe central du pneumatique.
